Europäisches Patentamt

European Patent Office

Office européen des brevets

(19)

(11) Publication number:

**0 346 536**
**A1**

(12) **EUROPEAN PATENT APPLICATION**

(21) Application number: **88305418.1**

(22) Date of filing: **14.06.88**

(51) Int. Cl.⁴: **E04B 1/19**

(43) Date of publication of application:
**20.12.89 Bulletin 89/51**

(84) Designated Contracting States:
**AT BE CH DE ES FR GB IT LI NL**

(71) Applicant: **Kumcher, Felipe**
**Ayacucho 1942 7th Floor**
**Buenos Aires(AR)**

(72) Inventor: **Kumcher, Felipe**
**Ayacucho 1942 7th Floor**
**Buenos Aires(AR)**

(74) Representative: **Spall, Christopher John et al**
**BARKER, BRETTELL & DUNCAN 138 Hagley**
**Road**
**Edgbaston Birmingham B16 9PW(GB)**

(54) A node-and-bar space-frame structure.

(57) A node-and-bar space-frame structure compris-
ing just two different types of separate elements
relatively simple to manufacture and easy to assem-
ble and eventually dismantle, providing thus in-
creased economy all round. The node element (11)
includes eighteen connector lugs (37), each featuring
a tongue-and-groove shape (41) cut out from a cyl-
inder. The bar element (13) has at each end thereof
matching connectors (39) of the same shape and
size as the node connectors, one end (29B) of the
bar being rotary. A bar-and-node connection is es-
tablished simply by pressing the matched connec-
tors into each other such that they latch firmly in
place. A sleeve-clamp (51) on each bar end slides
into place over each connection to secure it against
accidental unlatching. The eighteen node connectors
are integrated with three orthogonal inter-lockable
disk-shaped bodies (15), two of which are manufac-
tured as a pair of identical full-disk units (15A, 15B)
whilst the third (15C) is formed by a pair of identical
half-disk units (17). Plastics or metallic materials
may be used according to applications.

Fig. 3A

# A Node-and-Bar Space-Frame Structure

## Field of the Invention:

The invention is generally related to space-frames and more specifically to standard node and bar (or tube) elements with which space frames of different shapes, sizes and uses may be constructed. The nodes and bars of the invention are basic components which can be combined into different shapes of grids wherein each node is a point element knotting together a plurality of bars, such that each bar joins two nodes to each other.

For several reasons, the use of basic elements for building complex structures has been standard for some time in modern architecture. First of all, the system is cost-efficient because the same elements may be used for different structures and moreover they are already available for new structures. In second place, it is mechanically efficient because it inherently distributes loads spatially down along adjacent elements, in the form of elemental tensile and compression forces, spreading the overall strain practically uniformly over a large quantity of elements, at substantial distances therefrom. It is also economical because the elements are relatively easy to manufacture and may be mass-produced.

Furthermore, the space-frame is simple to build since a small number of nodes and bars may be combined to form basic grid or plate elements which are then joined to each other to form progressively bigger structures. The node and bar elements are relatively small and thus easy to handle and interconnect whatever the application, since their dimensions have no direct relationship with the size of the structure being built. Yet a further advantage is that temporary structures may be built, e. g. shop window displays, grandstands, etc., and the elements be non-destructively recovered for a new structure once the old structure is dismantled.

The space-frame may be either a simple self-supporting structure such as an exhibition stand, or else a structure having pillar- and beam-type supporting properties.

The predictable distribution of loads among the different bars simplifies and standardizes stress calculation in the structure. Instances wherein these structures may be used include: sports stadiums, canopies for exhibitions, fairs, railway station roofs, building entrances, signal gantries, bus-stop shelters, winter domes for in-door swimming pools, athletic facilities, etc.. In short, it may well be said that the subject structures are generally multi-purpose, since the modular concept inherent in these systems conveys complete design freedom for creating contemporary structures of the most varied dimensions and geometrical configurations.

## Background Art:

The now classic node-and-bar dismantable space-frame Mero® system was invented circa 1943 by Dr. Max Mengeringhausen. Other practical forms of the essential system have been marketed under different trade names such as, inter alia, Power-StrutTM, Unistrut® Systems I, II and III, and TramTM. All these systems feature standardization brought about by providing very few different components for the most varied designs. They differ mainly in the number of different directions in which bars may be connected to each node, the system by which the nodes and bars engage each other, the number of basic components or elements and the form of manufacture of the components.

The inmense majority of the dismantable space-frame structure systems known and used worldwide allow for bars to be oonnected to nodes in only eight different directions for forming virtual plates, the faces of which are formed by the bases of polyhedra. In the case of tetrahedra for example, the basic module is a square grid formed by four nodes linked to four bars. Another four bars joined at the vertex of the base, and which complete the construction of each tetrahedron, are also the links that establish the distance separating the faces of the virtual plate thus formed.

The eight directions are obtained by means of planar connector plates or nodes which can be linked to four straight bars (chords) and four curved bars (webs). The ends of the latter are bent into an "S" shape having a dominant middle portion inclined at about 45° and two ends slightly curved towards parallel directions, as is the case of the Power-Strut system used mainly in the U. S A. (brochure "5.2/ELc" is available from Elcen, Space-Frame Division, 9325 King Street, Franklin Park, Il60131, U.S.A.). The same result is obtained with a node featuring four coplanar surfaces in the form of a cross and four slanted portions in between adjacent pairs of the former, thus enabling the use of eight straight bars of equal length. An example of this last system is the Unistrut space-frame system I also wellknown in the U.S.A. (brochure n° 05100/UNH is available from Unistrut Space-Frame Systems, 35005 Michigan Avenue West, Wayne, Mi 48184, U.S.A.).

There is considerable less variety in twelve-direction systems because, from the structural point of view, even though nodes having twelve coupling directions enable plates of three or more layers to be configured, the basic problems in providing, by using the same components, an entire structure formed by horizontal plates and corresponding vertical plates or columns functioning as virtual roofs and walls respectively still remain unsolved. Hence such systems generally find application only in situations that do not present significant structural requirements. Its main application is for decorative purposes and closing off spaces as may be required in, e.g. grandstands, exhibitions, shop decorations, etc.. Tram is a good example of a 12-direction system known mainly in France.

Heretofore Mero was the only worldwide system providing eighteen possible directions at each node (a brochure is available from E. W. Bleecker & Assocs. Inc., P.O. Box 376, Bryn Mawr, Pennsylvania 19010, U.S.A.). It is a system developed on the basis of sturdy elements and calls for very strict tolerances during machining which, unfortunately, results in a high unitary cost. The system comprises nodes in the form of wrought steel spheres which are machined to produce flat faces perpendicular to each of the eighteen directions and drill a threaded bore in each. The bars comprise steel tubes, the ends thereof to which are affixed steel conical members carrying respective bolts. The bolts are screwed into and unscrewed from these cones by means of hexagonal-shaped bushings. The screws are each traversed by a lock-screw located in a longitudinal slot inset in the bushing. Once the bar has been placed in the corresponding position matching the node, the process of fastening the bar to the node is followed by unscrewing the bolt, the free end of which is, at the beginning of the operation, level with the bushing which acts as a "nut". As the bolt progressively emerges, it screws into the bore of the node until the head of the bolt is checked by the base of the cone. It is thus a very useful system for solving structural problems with standard elements more or less quickly, however its use has been restricted in practice to permanent structures only, because of its high cost and the laborious task involved during its assembly, as can be seen from the great majority of its applications in nearly all European countries. In summary, it can be said that the Mero system is very good from the technical point of view, but that it is at the same time expensive because of the high unitary value of its components and the workmanship involved in its assembly.

Although time has proved the worth of the space-frame system, there still is of course room for improvement. The present invention represents a quantum step ahead in the development and use of the basic space-frame system.

The Invention:

In the light of the foregoing, a main object of the subject invention is to bring about a simplification insofar related aspects regarding manufacture and assembly without reducing the maximum number of possible node-and-bar combinations, so as to achieve a system whereby basic elements simplified to the utmost may be easily assembled into very complex and varied structures. That is, the overall object of the invention is to reduce both manufacturing and assembly costs and at the same time improving, or at least without limiting, technical and functional features in space-frames.

The present invention is a node-and-bar system providing eighteen different connection directions distributed equiangularly in space. In this sense it is like the already mentioned Mero system, from which it differs because, inter alia, it does not resort to "extending" the length of the connection bars by means of screws which as they become unscrewed from the ends of each bar screw into the threaded bores of the nodes. On the contrary, the invention provides bars of constant length which may simply clamp or latch onto the node through a just as simple pressing action which produces a connection having full compressive and tensile force transmissibility. The node is preferably formed by the convergence of eighteen identical tongue-and-groove connecting lugs. Whilst each bar end also features a connecting lug the shape of which complements that of the connecting lugs of the nodes; preferably, the connecting lugs both on the node and at the bar ends have identical shapes. In this way, each bar end may penetrate the virtual sphere formed by the eighteen node lugs and be pressed into a chosen one of the latter. In particular, the shape of the connecting lugs is such that they may mesh with each other and remain latched in place. This represents a significant advantage over the forementioned Mero system wherein, once the two nodes to be linked by a bar are in position, it is necessary to position the bar coaxially with the axis joining the node centres, such that the bar ends touch the flat face surfaces of both nodes, before the actual task of firmly connecting the bar end to the node may be done. In the subject invention, the bar ends engage the node lugs as soon as the bar is aligned with the node centres, then the connection is secured in place by simply sliding over it a sleeve-like clamp having retaining means. The function of the sleeve-clamp is only to stop the connecting lugs becoming disjointed, since it is the type of connection in itself that resists the tensile or compressive stresses to which the bars and nodes are subjected to.

Another important aspect of the invention is referred to a novel configuration of the node which vastly simplifies the manufacturing process and reduces costs in relation to the prior art systems. Physically, each node is a virtual sphere defined by the eighteen connector lugs which are preferably integrated with a nucleus formed by three disk-shaped body members which interlock together in the three Cartesian (i.e. mutually orthogonal) planes. Moreover, according to a further related aspect of the invention, the three disk-shaped members are comprised by just two pairs of identical unitary members which significantly simplifies the moulding operation during manufacture. One pair of the identical units directly corresponds to two of the disk-shaped bodies, whilst the remaining pair comprises two generally half-disk shaped units which may be assembled onto the former pair to form the third disk-shaped body member. The geometries of the four members are such that they complement each other and assemble easily into a node, whereafter binding means may be applied nearly just as easily to secure the members together. The forces that the bars transmit to one another via the nodes are transmitted directly from one member to another thereof by virtue of the stated interlock relationship.

Each bar carries end members similarly moulded like the node lugs and, whilst one of the bar lugs is fixed to the corresponding bar end, the other is rotatively mounted on the opposite end of the bar and held in place by a collar or other suitable retaining means. In this way, the bar ends may be twisted relative to each other, so that they may be readily accommodated into the right position facing the node lug which it is to engage, before making good the connection by simply pressing the bar lug into the node lug and sliding the sleeve-like clamp over it.

The material used for the invention may be chosen according to the application. Moulded plastics may do for self-supporting structures, or a ferrous material may be used when greater strength is required. Non-ferrous materials such as bronze may be chosen otherwise.

Hence the present invention offers a system which is more economical by virtue both of its lower production expense and the ease with which it may be assembled or dismantled. Indeed, the economy is further enhanced by the small number of low-cost primary components that need be manufactured and by the fact that the assembly does not require highly-specialized labour. Insofar structural strength, there is an additional economy in the subject invention in view of that components of small dimensions fulfill like requirements in relation to the known art.

Objects, features and advantages of the present invention are further apparent and expanded in the detailed description set forth herein after the following reference to the appended drawings.

The Drawings:

Figure 1 is a picture of an elemental grid which is part of a virtual plate forming part of a space-frame structure according to the invention.

Figure 2 shows the four basic units which form a node of the invention, said units being shown disassembled and positioned in the way in which they are to be assembled.

Figure 3 shows the units of figure 2 assembled into a node and is divided into sub-figures 3A, 3B and 3C to illustrate how a bar of the invention is progressively connected thereto. Figure 3A further shows a full side view of the bar.

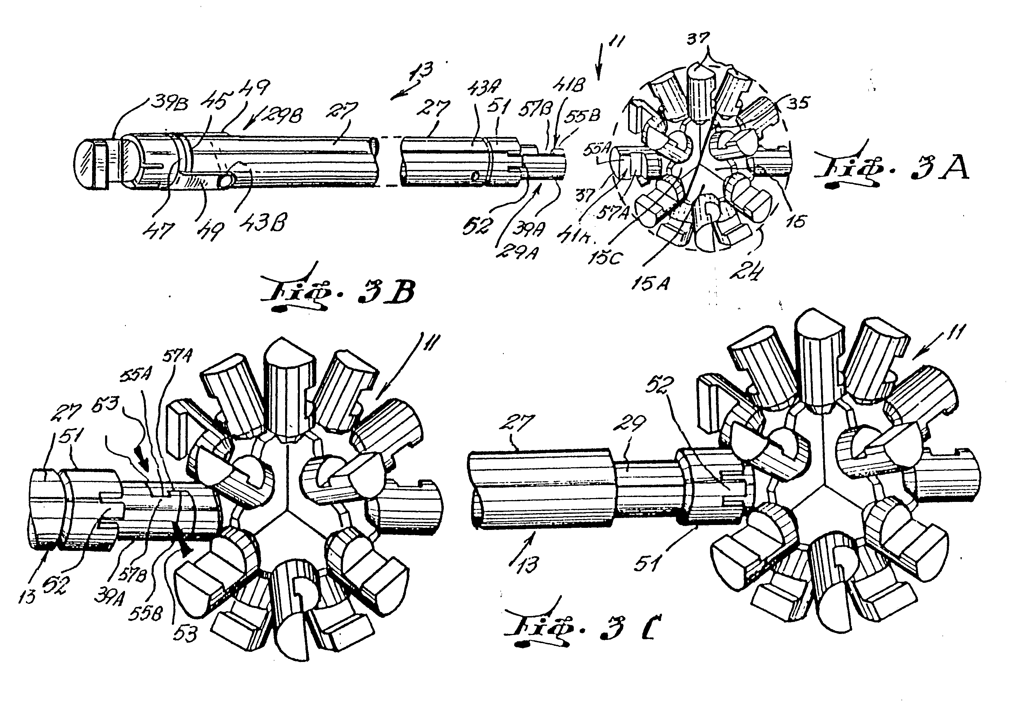

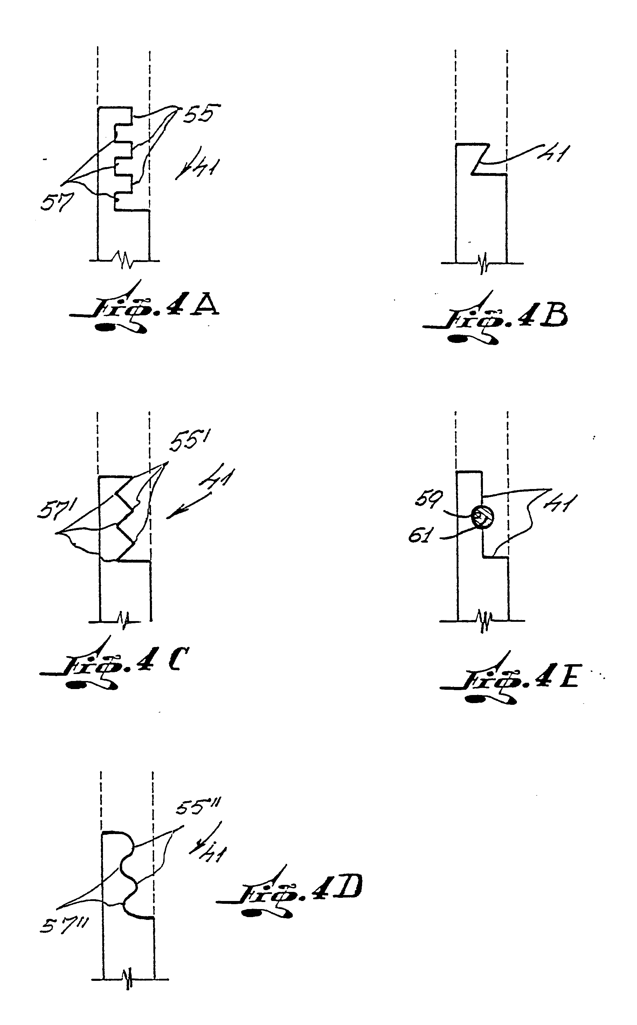

Lastly, figures 4A, 4B, 4C, 4D y 4E are schematics showing alternative embodiments of the connecting lug means, insofar geometrical aspects of the mating surfaces.

An Example:

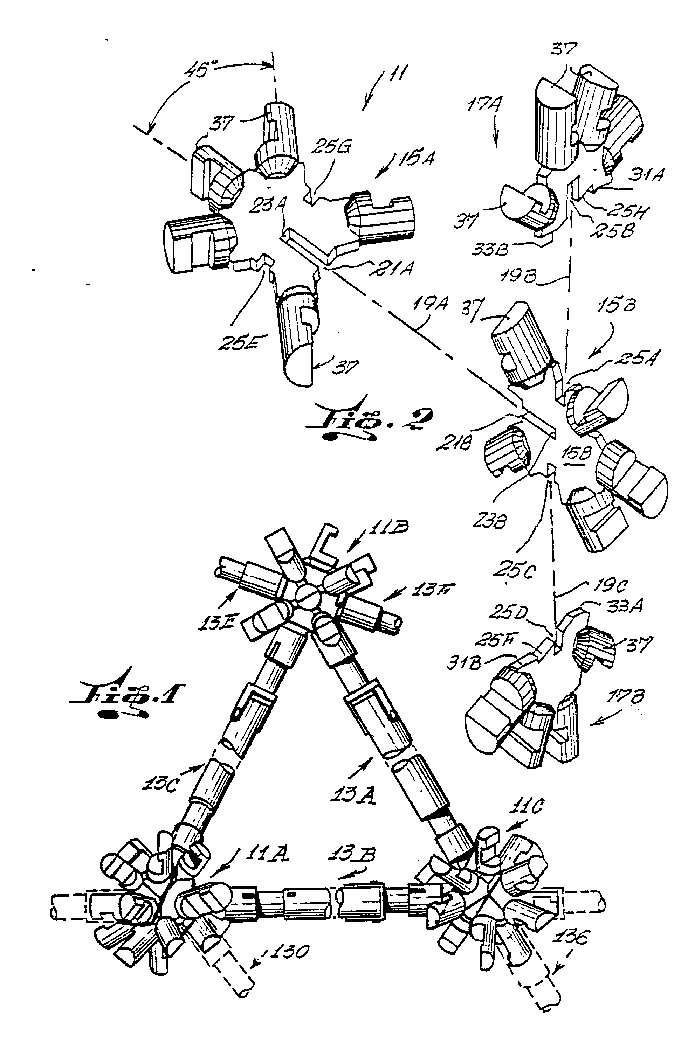

The space-frame structure of the instant invention may be built on the basis of virtual plates of different shapes and sizes made up by combining nodes 11 and bars 13 in a predetermined manner. For instance, the virtual plates may be cubes which are formed side-by-side into layers, adjacent layers being connected to each other by means of other virtual plates of like or different shape, e.g. pentahedron. Figure 1 shows a simple triangular grid formed by three nodes 11A, 11B and 11C and three bars 13A, 13B and 13C connected together and which forms part of the space-frame structure by virtue of additional connecting bars 13D, 13E, 13F... (the letter suffixes in the reference numerals are omitted throughout this description when generalizing).

Figure 2 shows the main components of a node 11 (also known in the art as the "nucleus", "core" or "knot" element) and how they are readily assembled into a virtual sphere defining the node 11. The basic components for each node 11 are two pairs of identical units 15A, 15B; 17A, 17B, which are assembled as depicted by dash-and-dot lines 19A, 19B, 19C into three mutually orthogonal interlocked disk-shaped bodies 15A, 15B, 15C, as may be seen in figure 3A.

The nucleus of the node 11 is put together as indicated in figure 2, wherein the first pair of like units 15A, 15B corresponding to the full-disk shape are joined together by combining a long recess 21A in unit 15A with a similar recess 21B in unit 15B. This is done by moving these recesses 21 into each other along line 19A until respective end-walls 23A, 23B thereof come into contact, thus engaging and retaning both bodies 15A, 15B perpendicular to each other. Since the bodies 15 are to form a virtual sphere 24 (figure 3A), the depth of the long recesses 23 is such that the end-walls 23 are at the centre of the node 11. Thereafter, the basic assembly of the node 11 is completed by adding on the remaining pair of identical units 17 to form the third disk-shaped body 15C (figure 3A), following similar movement patterns along lines 19B and 19C, respectively. In order that they mate in the proper position, short recesses 25A-H are provided in each of the units 15A, 15B, 17A, 17B in appropriate positions as may be seen in the drawing (figure 2).

The half-disk units 17 converge onto the assembled nucleus units 15A, 15B with recesses 25A and 25B mating together on one side and recesses 25C and 25D on the other, until respective pairs of radial borders 31A, 33A; 31B, 33B come into contact. In this position, the essential part of the node element 11 is assembled and it only remains to bind the node components together either by:
adhesive bonding;
welding seams or welding spots at, e.g., the trihedral angles formed where the three bodies 15 intersect; or else
simply strapping the units 15, 17 together by means of, for instance, a pair of wire bands 35 wound round the pieces 15, 17 as shown in figure 3A.

As shown in figure 3A, integrating the three body members 15 into a virtual sphere 24 forms one of the two basic elements of the invention, i.e. the node 11. The other basic element is, of course, the bar 13 which is ilustrated in full in figure 3A.

Each bar 13 comprises a tubular body 27 having two end-portions 29A, 29B. In order that the nodes 11 and bars 13 may be assembled into a space-frame estructure according to the invention, mutually complementary connecting or mating means are provided distributed over the surface of the virtual sphere 24 of each of the nodes 11 and at the ends 29 of each of the bars 13, as described in more detail further on hereinafter.

The connecting means comprise tongue-and-groove lugs (fingers or pins) 37 and 39 on the node 11 and bars 13, respectively, and are provided with corresponding mating surfaces 41A, 41B shaped to complement one another such that they may interlock and clamp together.

Eighteen connecting lugs 37 are provided on each node projecting radially outwards from the centre of the virtual sphere 24. These eighteen lugs 37 represent the eighteen directions at which different bars 13 may be connected to a single node 11, and they are distributed equiangularly in each plane such that there are eight lugs 37 coplanar with each disk body 15, the adjacent lugs 37 are oriented at 45° from one another and every other lug 37 is coplanar with two of the three bodies 15.

Going back to figure 2, it may be seen that the lugs 37 are manufactured as an integral part of the units 15, 17. To obtain the required uniform distribution of the lugs 37 around the virtual sphere 24, each of the units 15, 17 is theoretically subdivided into sectors of a circle sustaining a 45° arc each. In the full-disk units 15A, 15B, the connecting lugs 37 are provided in each of the eight directions thus defined except for the three directions corresponding to the recesses 21, 25. Regarding the latter, it may be noted that in each of the full-disk units 15A, 15B the short recesses 25 are located 180° opposite each other, whilst the single long recess 21 is perpendicular thereto. In the half-disk units 17, the connecting lugs 37 are positioned one after the other at 45° intervals. Hence the full-disk units 15A, 15B contribute five lugs 37 apiece and the half-disk units 17 four lugs 37 apiece, thus providing the eighteen connecting directions at each node 11.

The pair of bar lugs 39 are at opposite ends 29 of the bar 13 and whilst one of the lugs 39A is fixedly attached thereto by means of a pin 43A that rivets the tubular body 27 to the lug 39A, the other 39B is rotatively mounted, as may be seen in figure 3A. In order to achieve this rotary fit, the second connecting lug 39B is provided with a circular flange 45 which is held in place by a collar 47. The collar 47 is secured by means of a pair of ears 49 forming an integral part thereof and which are riveted to the tubular body 27 by means of a second pin 43B.

At each end of the bar 13 there is also a respective sleeve 51 for sliding over the connection between the corresponding lug 39 and a matching lug 37. The function of these sleeves 51 is simply to keep the connection in place if the structure is subjected to jigging or vibrations and it plays no part in the self-supporting property and the stress transmissibility of the system. To keep it in place over an established connection, each sleeve 51 is provide with retaining means such as a pair of resilient fingers 52. Each finger 52 has an abutment (not visible in the drawings) on the inside and free end thereof that exerts pressure against the body of the engaged lug 37 by virtue of the resiliency of the finger material, thus keeping the clamp 51 in place over the connection. Instead of the finger means 52, other retaining means such as lockscrews can be used, particularly when a non-resilient material such as metal is used.

The sequence given by figures 3A, 3B and 3C ilustrates how a node-and-bar connection is established. To begin with, the connecting ends 37 and 39 are matched by positioning the bar 13 appropriately as indicated in figure 3A and, if necessary, rotating the bar end 29 until the mating surfaces 41A, 41B face each other. Then the lugs 37, 39 are pressed sideways against each other as indicated by arrows 53 in figure 3B until they latch onto each other and clamp in place as shown in figure 3B. This is all that is needed to establish a primary connection between the node 11 and the bar 13 which is sufficient to resist and transmit all stresses derived by the self-supporting action of the space-frame and, in the case of supporting structures, all loads within a specified nominal range. This is because all tensile or compressive forces transmitted between the node 11 and the bar 13 will be perpendicular to the unclamp direction (arrows 53 pointing the other way round) of the connection, that is, radial relative to the node 11 and axial relative to the bar 13. Finally, the connection is secured against accidental unlatching by sliding the sleeve 51 to cover over the connection as can be seen in figure 3C. The significance of these three quick straight-forward steps for firmly connecting a node and a bar together should be evident to those skilled in the art.

Another feature of the invention is conveyed by the geometry of the connecting lugs 37, 39 which, as just described hereinbefore, is such that connections may be established simply through a latching effect. According to a first aspect thereof, the lugs 37, 39 have a generally partial cylindrical shape and, more particularly, are segments cut out from a cylindrical body. Specifically, the node lug 37 and the bar lug 39 will merge into a single cilindrical body when connected. Preferably, both the node lugs 37 and the bar lugs 39 are identical and simultaneously complementary replicas of each other, so as to simplify designing and manufacturing costs and, more importantly, to optimize the transmission power of the connection.

According to a second aspect, the geometry of each lug 37, 39 represents a tongue-and-groove combination. As shown in figures 2 and 3, the mating surfaces 41 (which are the planes cut out from the cylinder) are formed by a tongue 55 at the very end of each lug 37, 39 and which projects over a groove 57 inwardly adjacent thereto. Preferably (although not necessarily) the tongue-and-groove combination 55, 57 are shaped to define a succession of flat faces at right angles with each other, such that the top face of the tongue 55 and the bottom face of the groove 57 are parallel to each other and to the longitudinal axis of the lug 37 and at right angles with the flat walls on either side of the groove 57 and the end wall of the lug 37, 39 which are in generally parallel planes transversal to the longitudinal direction. A connection is made when each straight tongue 55A, 55B is snug in the corresponding groove 57B, 57A.

The simplification brought about by the present invention is not at the expense of the structural strength of the system. A comparison with the prior art Mero system will serve the purpose of showing this. Within the range of sizes offered by the different Mero systems, the smallest corresponds to a tubular bar having 30 mm in outside diameter and 1.6 mm in wall thickness; it is dimensioned with an M 12 bolt having a nucleus with a diameter of 9.73 mm and a cross-section of 74.3 mm². In the present invention, the most committed section of the connecting lugs is never less than 50% of the surface of the cross-section of the cylinder from which they are cut out; hence a basic cross-section of 150 mm² (which is double that of the M 12 bolt in the Mero system) corresponds to a lug 13.82 mm in diameter.

Figures 4A to 4E illustrate alternative shapes which may be given to the longitudinal cross-sections of the mating surfaces 41 of the connection lugs 37, 39. In figure 4A, the mating surface 41 is defined by a plurality of straight tongues 55 (for instance three) which alternate with complementary grooves 57. In figure 4B, the mating surface 41 is slanted to provide a pointed tongue 55′ and complementary groove 57′. The options shown in figures 4A and 4B are combined in figure 4C to produce a saw-tooth surface 41 featuring pointed tongues 55′ and V-shaped grooves 57′. Figure 4D represents an alternative to the flat faces of the preceding embodiments in the form of a curved mating surface 41 having a sinusoidal cross-section so as to define rounded tongues 55″ and grooves or valleys 57″. Yet a further possibility in some cases is the flat mating surface 41 shown in figure 4E provided with a transversal half-round notch 59 wherein a cylindrical key-pin 61 may be embedded to hold fast the connection.

In all these embodiments, the geometries shown in figures 4A to 4E are ideally identical in shape and size in both the node and bar lugs 37, 39. The last embodiment (figure 4E) differs from the former in that the mating surface 41 does not have the self-latching tongue-and-groove combination integrated therewith, instead the tongue means are embodied by the key-pin 61; however the full force transmissibility capacity of the connection is present as in all the other embodiments, according to an important property of the invention.

The materials used for embodying the basic elements 11, 13 of the invention may be chosen according to the different types of applications and stresses which may be envisaged. In particular, different kits of the present invention may be provided for self-supporting and for loaded space-frame structures. In the case of simple self-supporting spaced-frames having no-load specifications the bar ends 29, the node unit members 15A, 15B, 17A, 17B and the bar sleeves 51 may be made of plastics, such as nylon™ resin mixed with glass fibres. This will convey added strength to the mating surfaces 41 which will favour the firmness of the latch connections. In this case, each pair of identical units 15A, 15B; 17A, 17B may be moulded or forged with the same die cavity, such that with just a few-cavities die all the necessary parts for the nodes 11 and the bar ends 29 may be moulded. The tubular body 27 and the collar 47 may be of a light metallic material such as aluminium.

To support heavy loads such as in civil engineering constructions, the parts can be all made of strong ferrous material, such as alloy steel. The two pairs of identical units 15A, 15B, 17A, 17B can be first forged in a straight-forward manner and then passed on to a cutting die where the ragged edges forthcoming from the forge can be eliminated. A surface finishing Roto-Finish process is then required before the four units 15A, 15B; 17A, 17B can be assembled into a node 11 and welded to bind them in place. The bar ends 29 are also obtained and processed like the node units 15A, 15B, 17A, 17B, whilst the body 27 can be cut from steel tubing and the collars 47 manufactured from sheet steel.

There are of course, other ways of manufacturing the node 11 that lead to the same result. For instance, the bodies 15A, 15B, 15C may have other shapes in relation to a disk or be shaped to combine in a different manner. It is also envisaged to manufacture the node 11 as a unitary body by means of a lost wax casting process or any other similar process bringing out the same result.

Industrial Application:

The system of the invention has a wide scope of applications ranging from simply decorative to heavy and complex civil engineering fields. The component elements 11, 13 of the present invention may be just as well used for building small simple displays as for practically infinitely vast and complex structures.

The manufacturing process may be carried out at plastics moulding or ferrous forging facilities and the product commercialized in the form of nodes-and-bars kits.

Although the essential features of the invention have been brought out by means of a preferred embodiment, the invention is not limited to his embodiment and extends on the contrary to all alternative forms within the purview of the appended claims.

Claims

1. A node (11) for a space-frame structure, the latter including a plurality of bars (13) and a plurality of such nodes, wherein each bar connects two such nodes spaced apart from each other; said node having a plurality of similar first connecting means (37) for engaging complementary second connecting means (39) provided at each end (29) of said bars, characterised in that each of said first connecting means comprises a lug element projecting in a plurality of different radial directions and shaped (41) to engage in compressive and tensile stress transmissibility relationship with said second connecting means by simply pressing the bar sideways (53) against the first connecting means once both connecting means have been properly positioned face-to-face with each other.

2. The node of claim 1, characterised in that said first and second connecting means comprise respective lug elements having complementary mating end portions (41) of the same shape and size.

3. The node of claim 2, characterised in that said lug elements are shaped to latch and mesh with each other.

4. The node of claim 3, characterised in that said lug element has a tongue-and-groove shape including at least one straight tongue (55) at the end thereof and at least one corresponding complementary groove (57) inwardly adjacent thereto.

5. The node of claim 3, characterised in that the shape of the longitudinal cross-section of said lug elements is either saw-tooth ($55'$, $57'$) or sinusoidal ($55''$, $57''$).

6. The node of claim 1 or 2, characterised in that each lug has a generally flat mating surface provided with a transversal notch (59) for embedding a key-pin (61) therein.

7. The node of any preceding claims, characterised in that said connecting means are made of a mouldable material such as nylon resin with glass fibres or of a metallic material such as bronze or ferrous material such as steel.

8. The node of any preceding claim, characterised in that said plurality of first connecting means comprises eighteen lug elements, each projecting in a direction contained in at least one of three rectangular Cartesian planes such that each of said planes contains eight equally spaced ones of said lug elements and each pair of said planes shares two diametrally opposite ones of said lug elements.

9. A node (11) for a space-frame structure, the latter including a plurality of bars (13) and a plurality of such nodes wherein each bar connects two such nodes spaced apart from each other; said node having a plurality of similar first connecting means (37) for engaging complementary second connecting means (39) provided at each end (29) of said bars, characterised in that said node comprises a nucleus wherefrom said first connecting means project radially outwards in different directions, said nucleus comprising three disk-shaped bodies (15) arranged mutually perpendicular to each other.

10. The node of claim 9, characterised in that said disk-shaped bodies removably interlock with each other.

11. The node of claim 10, characterised in that two of said bodies are full-disk units (15A, 15B) whilst the remaining body (15C) comprises two half-disk units (17A, 17B).

12. The node of claim 11, characterised in that said full-disk units are identical to each other and said half-disk units are also identical to each other, such that the like units may be manufactured in the same die cavity.

13. The node of claim 12, characterised in that said units are held together with binding means (35) applied once they have been assembled into the nucleus.

14. The node of claim 11, 12 or 13, characterised in that said units are either moulded in a plastics material such as nylon resin with glass fibres or forged in a metallic material such as steel or bronze.

15. The node of any of claims 9 to 14, characterised in that each disk-shaped body has eight lugs (37) projecting radially outwards, equiangularly spaced, therefrom, each lug forming one first connection means.

16. A set of nodes (11) and bars (13) for forming a space-frame structure comprised of a plurality of such bars connected at a plurality of such nodes spaced apart from each other so that each bar connects two such spaced-apart nodes; each node having a plurality of first connecting means (37) oriented in different directions and each bar having two second connecting means (39) at the ends (29) thereof adapted to firmly engage a first connecting means each, characterised in that said first and second connecting means are shaped (41) to engage each other in a force transmissibility relationship by applying pressure (53) against both connecting means once they have been matched to face each other properly.

17. The set of nodes and bars of claim 16, characterised in that one (29B) of the two ends of each bar is rotative with respect to the bar.

18. The set of nodes and bars of claim 17, characterised in that each bar comprises a tubular body (27) having two lug elements at its ends, at least one of the lug elements having a flange portion (45) which is rotatively held in the axial position by retaining means such as a collar (46) fixed to said tubular body.

19. The set of nodes and bars of claim 16, 17 or 18, characterised in that both said first and second connecting means are lug elements, the end portions of which are shaped so as to mate each other and are identical in both shape and size.

20. The set of nodes and bars of claim 19, characterised in that said lug elements include at least one tongue and groove element (55, 57) such that they latch onto each other when engaged.

21. The set of nodes and bars of claim 19 or 20, characterised in that said tubular body and the collar are made of a light-weight material such as aluminium, whilst both bar lug elements and the nodes are made of a moulding material such as nylon resin with glass fibres.

22. The set of nodes and bars of any of claims 16 to 20, characterised in that the nodes and bars are made of a metallic material such as bronze or ferrous material such as steel.

23. The set of nodes and bars of any of claims 16 to 22, characterised in that each bar is of fixed length.

24. The set of nodes and bars of any of claims 16 to 23, characterised in that each bar end includes a clamping means (51) for securing the connection once the corresponding second connecting means has engaged the first connecting means.

25. The set of nodes and bars of claim 24, characterised in that said clamping means is a sleeve element (51) arranged to be slid over said connection and provided with retaining means (52) for keeping it in place.

26. A method for mounting a space-frame structure with a set of nodes (11) and bars (13) by successively connecting a node to an end of a bar such that each bar is finally connected between two nodes, characterised by the steps of: placing the end of the bar to be connected next to a selected connecting lug (37) of the node; turning, if necessary, the bar end relative to the selected lug until their respective mating surfaces (41) face each other complementarily; and pushing the bar end against the lug until said mating surfaces engage each other.

27. The method of claims 26, characterised in that after said mating surfaces are engaged, a clamp (51) provided on the bar end is slid over the connected parts of the bar end and the node lug to secure these in place against vibration and jigging.

*Fig. 2*

*Fig. 1*

Fig. 3A

Fig. 3B

Fig. 3C

Fig. 4A

Fig. 4B

Fig. 4C

Fig. 4E

Fig. 4D

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | DE-A-3 413 546 (WANZL) <br> * Page 6, lines 14-23; page 7, lines 1-26; page 8, lines 1-26; page 9, lines 1-5; figures 1,2 * | 1,2 | E 04 B 1/19 |
| A | FR-A-2 136 936 (MAYMONT) <br> * Page 8, lines 7-40; page 9, lines 1-30; figures 8,9 * | 1,6 | |
| A | US-A-4 340 318 (BUSH) <br> * Column 3, lines 40-68; column 4, lines 1-68; column 5, lines 1-8; figures 1-4 * | 1-4,16 | |
| A | US-A-4 551 960 (FLEISHMANN) <br> * Column 6, lines 6-68; column 7, lines 1-49; figures 3-5 * | 10,11 | |

TECHNICAL FIELDS SEARCHED (Int. Cl.4)

E 04 B

The present search report has been drawn up for all claims

| Place of search | Date of completion of the search | Examiner |
|---|---|---|
| THE HAGUE | 17-01-1989 | SCHOLS W.L.H. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P0401)